# EUROPEAN PATENT APPLICATION

(11) **EP 2 088 795 A1**
(43) Date of publication of application: **12.08.2009**
(21) Application number: 07845920.3
(22) Date of filing: 13.12.2007
(51) Int. Cl.: H04Q 7/30

(54) **A SYSTEM, BASE STATION AND METHOD FOR COMMUNICATION OF MULTI-MODE BASE STATIONS**

(30) Priority: 15.12.2006 CN 200610167280
(71) Applicant: Huawei Technologies Co., Ltd., Longgang District, Shenzhen, Guangdong 518129 (CN)
(72) Inventor: QIU, Yong, Shenzhen Guangdong 518129 (CN); XIE, Mingjiang, Shenzhen Guangdong 518129 (CN); DENG, Yongfeng, Shenzhen Guangdong 518129 (CN)
(74) Representative: Thun, Clemens
(86) International application number: PCT/CN2007/003575
(87) International publication number: WO 2008/071088

(57) **Abstract**

A system and method for communication of multi-mode base stations is provided. The multi-mode base stations are communicatively coupled to each other through a uniform interface unit that provides a basal physical transmission bearer and a uniform transmission protocol stack, namely uniform logic interface, for transmitting a higher layer application protocol to support information interaction, such as load information, resource usage information, interference information, handover flow signaling information, data forwarding, between multi-mode base stations even base station sub-nodes in each multi-mode base station. The higher layer application protocol borne by the uniform transmission protocol stack is mainly a user plane protocol and a control plane protocol. The implementation function of the interface unit between base station sub-nodes in the multi-mode base station is further provided. When the interface unit provided by the multi-mode base station uses a uniform protocol stack, if the similar uniform protocol stack is provided between multi-mode base stations, the performance of the system can be greatly improved.

## Description

### Field of the Invention

The present invention relates to the field of wireless communication technologies, and particularly to a base station, system for communication of multi-mode base stations, and method for communication of multi-mode base stations.

### Background of the Invention

With the development of wireless communication technologies, more and more radio access technologies (RATs) are applied. These different RATs include global system for mobile (GSM) technology, wideband code division multiple access (WCDMA) technology, world interoperability for microwave access (WiMax) technology, long term evolution (LTE) technology, air interface evolution (AIE) technology, code division multiple access (CDMA) 2000 technology etc. These different radio access technologies contribute to different mode base station systems. For example, in GSM technology, a base station is referred to as BTS; in WCDMA technology, a base station is referred to as NodeB; in WiMax technology, a base station is referred to as BS; in LTE technology, a base station is referred to as eNodeB, etc. In existing mobile communication systems, the base stations usually each form a device node alone, but in the latest mobile communication system, these base stations are probably located in the same device node, may share part of the resource of the same device node, such as backplane bus, CPU, memory of the same device node, even some board resources of the same device node. The saying "in the device node" herein includes physical capacity expansion of the device node, such as enlarging the capacity of the device node by way of frame stack. A base station supporting many access technologies is referred to as multi-mode base station.

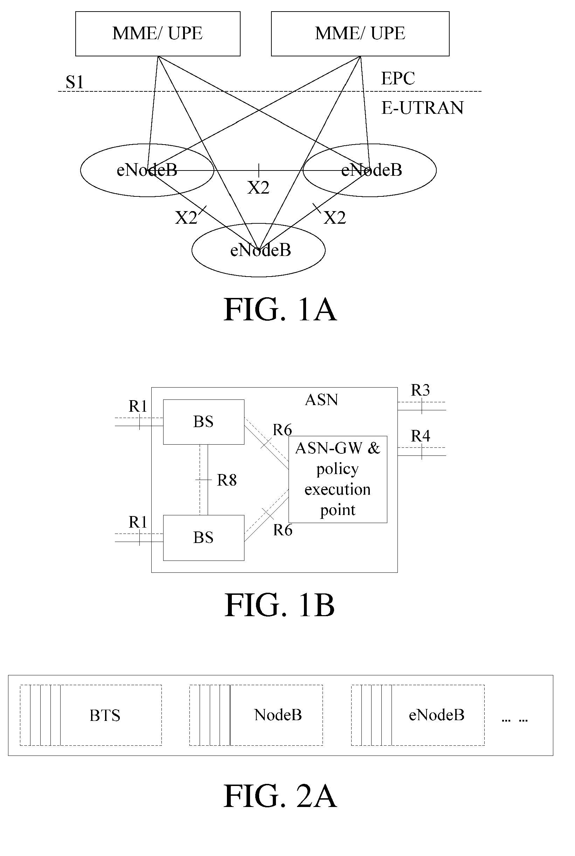

For single mode base station, in some systems, a connection function interface exists between each two base stations, and in other systems, no connection function interface exists between each two base stations. For example, in a LTE system, in order to increase the rate of successful handover, it is expected that load information of adjacent cells is delivered between the eNodeBs, and therefore, a connection interface should exist between the eNodeBs, the eNodeBs are communicatively coupled to each other through the X2 interface, as shown in FIG. 1A. In this way, before the source eNodeB sends a handover request, a better target cell can be selected to perform switching according to the load information acquired by the X2 interface and other measuring information of the terminal or eNodeB. Because each cell in the LTE system employs the orthogonal frequency division multiplexing access (OFDMA) technology, interference coordination is needed between the cells, and in this way, the resource usage, such as the usage of sub-carrier, at least including the sub-carrier used in a past period of time, the sub-carrier to be allocated to the terminal, and the sub-carrier in use, and the power of the sub-carrier, needs to delivered between the cells through the X2 interface. The usage of sub-carrier can be used for interference coordination between the cells. For another example, although it is stated that the BSs in a WiMax system are communicatively coupled to each other through R8 interfaces, as shown in FIG. 1B, clear definition of the function of the interface does not exist for now. For yet another example, in a WCDMA system, a function interface in direct connection is not defined between NodeBs, but an Iur interface exists between radio network controllers (RNCs). Currently, the Iur interface provides four functions, namely, supporting basic mobility between the RNCs, supporting dedicated channel service, supporting public channel service, and supporting global resource management. For another example, interfaces between BSs are defined in CDMA2000 system, including an A3 interface and an A7 interface. The A3 interface defines user service and signaling interface between the BSs, and the A3 interface provides for transmitting low rate voice data packets after compress coding on the service sub-channel. The A7 interface defines the signaling interface between the BSs, and the signaling sub-channel of the A7 interface and the A3 interface provides signaling support for direct soft handover, access handover between the BSs.

Currently, the interface between the multi-mode base stations described above is a multi-mode interface according to the existing technology. The multi-mode interface may be multiple distributed independent logic interfaces, or multiple distributed independent physical interfaces. That is to say, each single mode base station in the multi-mode base station is respectively connected with the single mode base station of the same mode in other multi-mode base station. If each multi-mode base station includes LTE base stations, the function of the X2 interface should be at least provided between the multi-mode base stations. If each multi-mode base station includes WiMax base stations, the function of the R8 interface should be at least provided between the multi-mode base stations, though the function of the R8 interface is not defined clearly in WiMax network currently. If each multi-mode base station includes base stations of CDMA2000, the functions of the A3 interface and the A7 interface should be at least provided between the multi-mode base stations. For example, in multiple multi-mode base stations, the LTE base stations are communicated with each other through the X2 interfaces. The WiMax base stations are communicated with each other through the R8 interfaces. The base stations employing other RAT or some future RAT may be communicated by other interfaces. These interfaces between the same mode base stations in different multi-mode base stations may greatly increase the complexity of the interface, and increase the complexity of maintenance and updating, thus dramatically increasing the operating cost.

In addition, the way of simply inheriting original system interfaces will reserve some processing methods of original systems. For example, for GSM base station (BTS), or enhanced GSM base station (BTS + base station controller (BSC)) in the multi-mode base station, no interface exists between the BTSs, or between the BSCs to interact the load information of the cells, and therefore, the load of a target cell will not be referenced when determining handover policy. However, the LTE base stations may perform delivery of the load information through the X2 interface, and in this way, when performing handover between the LTE base stations, the load information may be considered as a handover determination condition to determine the target cell to be switched to. If the distributed independent multi-mode interfaces are provided between multi-mode base stations, no connection interface exists between the base stations that do not have any connection interface in original system, such as the GSM base stations (BTS), or enhanced GSM base stations (BTS + BSC). Unlike the LTE system, handover between these base stations is unable to exchange the load information between the base stations through the X2 interface, so the handover request has blindness to some degree, and the rate of handover failure will be higher.

### SUMMARY OF THE INVENTION

Accordingly, the present invention provides a system and method for communication of multi-mode base stations, making interaction between multi-mode base stations simpler. The present invention further provides a multi-mode base station of internal communication and a processing method thereof, thus realizing communication between single mode base station sub-nodes in the multi-mode base station.

The system for communication of multi-mode base stations provided by the present invention includes multiple multi-mode base stations, the multi-mode base stations are communicatively coupled to each other through a uniform interface unit, and the uniform interface unit is adapted to bear a higher layer application protocol.

The multi-mode base station of internal communication provided by the present invention includes base station sub-nodes supporting multi-mode, the base station sub-nodes are communicatively coupled to each other through an interface unit, and the interface unit is adapted to bear the higher layer application protocol.

The method for communication of multi-mode base stations provided by the present invention includes transmitting, by the multi-mode base stations, the higher layer application protocol to each other according to a uniform transmission protocol stack supported by the interface unit connected.

In the internal communication processing method of a multi-mode base station provided by the present invention, the multi-mode base station includes base station sub-nodes supporting multiple modes, and the method includes: transmitting, by the base station sub-nodes, the higher layer application protocol to each other according to a transmission protocol stack supported by the interface unit connected.

In the embodiments provided by the present invention, the multi-mode base stations are communicatively coupled to each other through a uniform interface unit that provides a basal physical transmission bearer and a uniform transmission protocol stack, namely uniform logic interface, for transmitting higher layer application protocol, so as to support information interaction, such as load information, resource usage information, interference information, handover flow signaling information, data forwarding, between multi-mode base stations even base station sub-nodes in each multi-mode base station. The higher layer application protocol borne by the uniform transmission protocol stack is mainly a user plane protocol and a control plane protocol.

The embodiments of the present invention further provide an implementation function of the interface unit between base station sub-nodes in the multi-mode base station. A function similar to X2 interface or R8 interface can be provided in the multi-mode base station, the interface may be a logic interface with a uniform transmission protocol stack, or distributed independent logic interfaces. The higher layer application protocol borne on the transmission protocol stack may be a higher layer application protocol originally supported by each single mode base station sub-node, or newly designed uniform higher layer application protocol. After the interface unit provided in the multi-mode base station adopts a uniform protocol stack, if the similar uniform protocol stack is provided between multi-mode base stations, a channel for transmitting protocol between multi-mode base stations and between base station sub-nodes in the multi-mode base station is established, and the performance of the system is thus greatly improved.

Additionally, if the multi-mode base stations are communicatively coupled to each other through a multi-mode interface, i.e., the base station sub-nodes of the same mode in different multi-mode base stations are communicatively coupled to each other through a currently defined interface, or connection interfaces exist only when interfaces have been defined currently between base station sub-nodes in the multi-mode base station, here, the base station sub-nodes between which no connection interface exists may interact information with each other through the base station sub-nodes having the connection interfaces, that is to say, an existing interface may transmit information of base station sub-nodes which does not have the connection interface by way of piggybacking. For example, the WiMax base station sub-node transmits interference information through the X2 interface between LTE base station sub-nodes to perform interference coordination. Or, GSM base station sub-nodes or GSM enhanced base station sub-nodes transmit load information through the X2 interfaces between LTE base station sub-nodes, so that when the GSM enhanced base station sub-nodes or BSCs perform cell switching, the load information can be taken into consideration, thus greatly increasing the rate of successful switching and enhancing the performance of switching.

### BRIEF DESCRIPTION OF THE DRAWINGS

FIG. 1A is a schematic drawing of X2 connection in a conventional LTE system;

FIG. 1B is a schematic drawing of R8 connection in a conventional WiMAX system;

FIG. 2A is a first schematic drawing of a multi-mode base station;

FIG. 2B is a second schematic drawing of a multi-mode base station;

FIG. 3A is a schematic drawing of connection between multi-mode base stations according to a first embodiment of the present invention;

FIG. 3B is a first schematic drawing of a control plane transmission protocol stack according to the first embodiment of the present invention;

FIG. 3C is a second schematic drawing of a control plane transmission protocol stack according to the first embodiment of the present invention;

FIG. 3D is a first schematic drawing of a user plane transmission protocol stack according to the first embodiment of the present invention;

FIG. 3E is a second schematic drawing of a user plane transmission protocol stack according to the first embodiment of the present invention;

FIG. 3F is a third schematic drawing of a user plane transmission protocol stack according to the first embodiment of the present invention;

FIG. 3G is a fourth schematic drawing of a user plane transmission protocol stack according to the first embodiment of the present invention;

FIG. 4A is a schematic drawing of connection between base station sub-nodes in the multi-mode base station according to a second embodiment of the present invention;

FIG. 4B is a first schematic drawing of a control plane transmission protocol stack according to the second embodiment of the present invention;

FIG. 4C is a second schematic drawing of a control plane transmission protocol stack according to the second embodiment of the present invention;

FIG. 4D is a first schematic drawing of a user plane transmission protocol stack according to the second embodiment of the present invention;

FIG. 4E is a second schematic drawing of a user plane transmission protocol stack according to the second embodiment of the present invention;

FIG. 4F is a third schematic drawing of a user plane transmission protocol stack according to the second embodiment of the present invention;

FIG. 4G is a fourth schematic drawing of a user plane transmission protocol stack according to the second embodiment of the present invention;

FIG. 5 is a schematic drawing of connection between base station sub-nodes in the multi-mode base station according to a third embodiment of the present invention;

FIG. 6 is a schematic drawing of connection between the multi-mode base stations, and between internal base sub-nodes according to a fourth embodiment of the present invention; and

FIG. 7 is a schematic drawing of information interaction between base station sub-nodes according to a fifth embodiment of the present invention.

### DETAILED DESCRIPTION OF THE EMBODIMENTS

A multi-mode base station refers to a base station supporting multiple RATs, and can be acquired by migration mode or universal mode. The migration mode refers to improvement of conventional base station supporting one RAT to enable the base station to support other RATs, thus becoming a multi-mode base station supporting multiple RATs. For example, add board in the slot of the conventional GSM base station or alter the conventional board software, so as to enable the conventional GSM base station to support WCDMA technology and become the multi-mode base station in which the GSM base station and the NodeB coexist. The migration mode can be considered as acquiring different base station network elements by way of allocation management of physical resource of the base station. The universal mode refers to forming a whole new network device node, and the device node can generate different base stations (such as BTS, NodeB, BS, eNodeB) in different physical resource parts according to configuration, so as to become the multi-mode base station supporting several RATs.

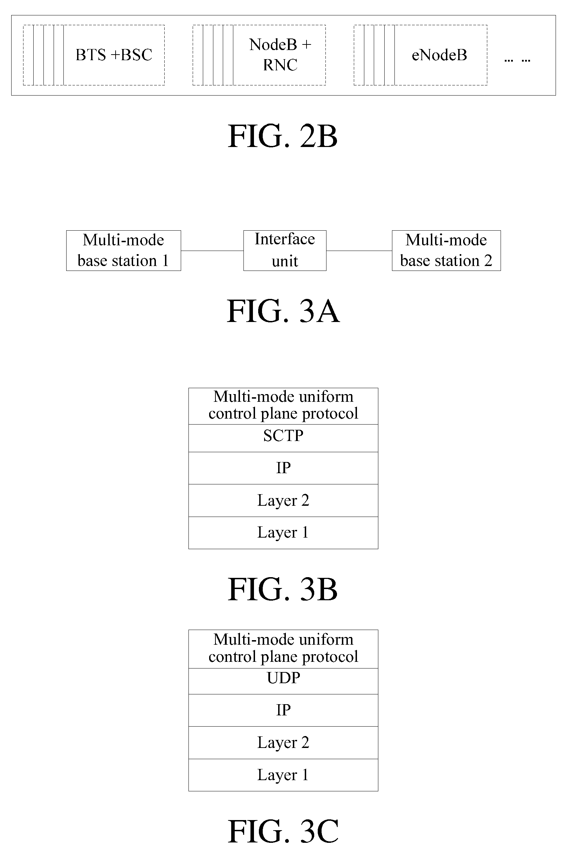

The form of the multi-mode base station is shown in FIG. 2. Additionally, the multi-mode base stations can share part of physical resources, and therefore, the base stations supporting different RATs in the multi-mode base station may probably have characteristics different from original single mode base stations. For example, GSM base station generated in the multi-mode base station may have the function of a BSC in a GSM system, that is to say, it is a GSM enhanced base station of BTS+BSC. A NodeB in the multi-mode base station also may be a WCDMA enhanced base station, for example, having the function of RNC, and thus, the form of the multi-mode base station also may be as shown in FIG. 2B. Each single mode base station in a multi-mode base station may be considered as a base station existing in the multi-mode base station in a form of node, and here, the single mode base stations in the multi-mode base station are referred to as base station sub-nodes. Multiple base station sub-nodes in the same multi-mode base station may support the same RAT.

The multi-mode base station is communicatively coupled to upper layer network elements, such as BSC, RNC, gateway (GW), access gateway (aGW), multi-mode base station controller, core network (CN) network element, or multi-mode CN network element. The multi-mode base station controller refers to a controller being able to control many types of base stations, such as RNC of WCDMA, and BSC of GSM. The multi-mode CN network element refers to a CN device node communicatively coupled to access network elements, which can provides functions of many types of CN node device, such as mobile service switching center (MSC) in GSM system, serving general packet radio service (GPRS) support node (SGSN) in a WCDMA system, SGSN and gateway GPRS support node (GGSN) in a WCDMA system, GW in a WiMax system, and aGW in a LTE system.

In the embodiment provided by the present invention, the multi-mode base stations are communicatively coupled to each other through a uniform interface unit, as shown in FIG. 3A. Different multi-mode base stations, i.e., the multi-mode base station 1 and the multi-mode base station 2, are communicatively coupled to each other through an interface unit that provides a basal physical transmission bearer and a uniform transmission protocol stack namely uniform logic interface for transmitting a higher layer application protocol. In this way, different multi-mode base stations transmit the higher layer application protocol through the uniform interface. The higher application protocol at least includes a control plane protocol and a user plane protocol. The functions implemented by the interface unit between the multi-mode base stations mainly include a control plane and a user plane. The control plane is used for implementing interaction of information, such as, load information, resource usage information, interference information, handover flow signaling information, and has the following main functions : supporting handover flow between cells, which may be handover between the cells of the same mode, or handover between cells of different modes; supporting interference coordination flow between cells, which may be interference coordination between cells of the same mode, or interference coordination between cells of different modes; supporting information interaction between cells, such as load information, interference information, resource usage information, which may be information interaction between cells of the same mode, or information interaction between cells of different modes. The user plane is adapted to implement interaction of user data, which mainly refers to transmit of user data between multi-mode base stations.

FIG. 3B is a first schematic drawing of a control plane transmission protocol stack according to a first embodiment of the present invention. As shown in FIG. 3B, the control plane transmission protocol stack includes a layer 1, a layer 2, an IP layer, a simple control transmission protocol (SCTP) layer, and a uniformly defined multi-mode uniform control plane protocol layer. In this way, specifically, a certain base station sub-node in the multi-mode base station sending control information may encapsulate the control information in turn according to the control plane transmission protocol stack, and send the control information. Specifically, a certain base station sub-node in the multi-mode base station receiving the control information may decapsulate the received control information in turn according to the control plane transmission protocol stack, acquire the content of the control information, and then performe corresponding operations according to the content of the control information. It can be seen, the SCTP protocol packet can encapsulate multi-mode uniform control plane protocol packet.

The control plane transmission protocol stack shown in FIG. 3B implements point to point transmission. When the multi-mode base station needs to implement point to multi-point transmission, its control plane transmission protocol stack is shown in FIG. 3C, and the control plane transmission protocol stack includes a layer 1, a layer 2, an IP layer, a user datagram protocol (UDP) layer, and a uniformly defined multi-mode uniform control plane protocol layer. In this way, specifically, a certain base station sub-node in the multi-mode base station sending control information may encapsulate the control information in turn according to the control plane transmission protocol stack, and then send the control information. Specifically, a certain base station sub-node in the multi-mode base station receiving the control information may decapsulate the control information in turn according to the control plane transmission protocol stack, acquire the content of the control information, and then perform corresponding operations according to the content of the control information. It can be seen, the UDP protocol packet can encapsulate multi-mode uniform control plane protocol packet.

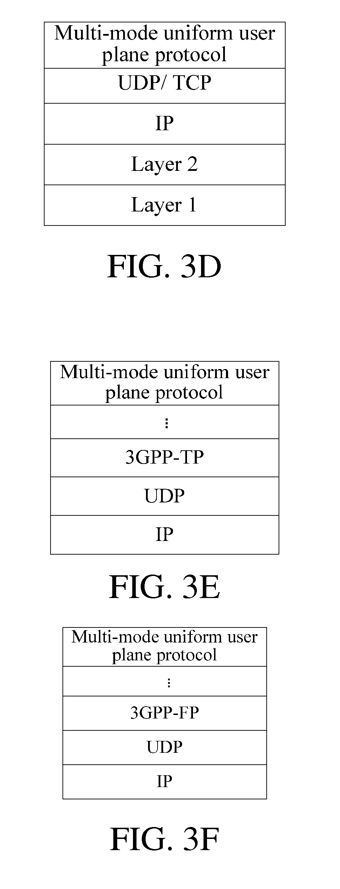

FIG. 3D is a first schematic drawing of a user plane transmission protocol stack according to the first embodiment of the present invention. As shown in FIG. 3D, when the user plane protocol employs the UPD/transport control protocol (TCP) bearer, the user plane transmission protocol stack includes a layer 1, a layer 2, an IP layer, a UDP/TCP layer, and a uniformly defined multi-mode uniform user plane protocol layer. In this way, specifically, a certain base station sub-node in the multi-mode base station sending user data may encapsulate the user data in turn according to the user plane transmission protocol stack, and then send the user data. Specifically, a certain base station sub-node in the multi-mode base station receiving the user data may decapsulate the received user data in turn according to the user plane transmission protocol stack, acquire the content of the user data, and implement the interaction of the user data. It can be seen, the UDP/TCP protocol packet can encapsulate the multi-mode uniform user plane protocol packet.

FIG. 3E is a second schematic drawing of a user plane transmission protocol stack according to the first embodiment of the present invention. As shown in FIG. 3E, when the user plane protocol employs the 3GPP tunnel protocol (3GPP-TP) bearer, the user plane transmission protocol stack at least includes an IP layer, a UDP layer, a 3GPP-TP layer, and a uniformly defined multi-mode uniform user plane protocol layer. In this way, specifically, a certain base station sub-node in the multi-mode base station sending the user data may encapsulate the user data in turn according to the user plane transmission protocol stack, and then send the user data. Specifically, a certain base station sub-node in the multi-mode base station receiving the user data may decapsulate the received user data in turn according to the user plane transmission protocol stack, acquire the content of the user data, and implement the interaction of the user data. It can be seen, the 3GPP-TP protocol packet can encapsulate the multi-mode uniform user plane protocol packet.

FIG. 3F is a third schematic drawing of a user plane transmission protocol stack according to the first embodiment of the present invention. As shown in FIG. 3F, when the user plane protocol employs the 3GPP frame protocol (3GPP-FP) bearer, the user plane transmission protocol stack at least includes an IP layer, a UDP layer, a 3GPP-FP layer, and a uniformly defined multi-mode uniform user plane protocol layer. In this way, a certain base station sub-node in the multi-mode base station sending the user data may encapsulate the user data in turn according to the user plane transmission protocol stack, and then send the user data. Specifically, t a certain base station sub-node in the multi-mode base station receiving the user data may decapsulate the received user data in turn according to the user plane transmission protocol stack, acquire the content of the user data, and implement the interaction of the user data. It can be seen, the 3GPP-FP protocol packet can encapsulate the multi-mode uniform user plane protocol packet.

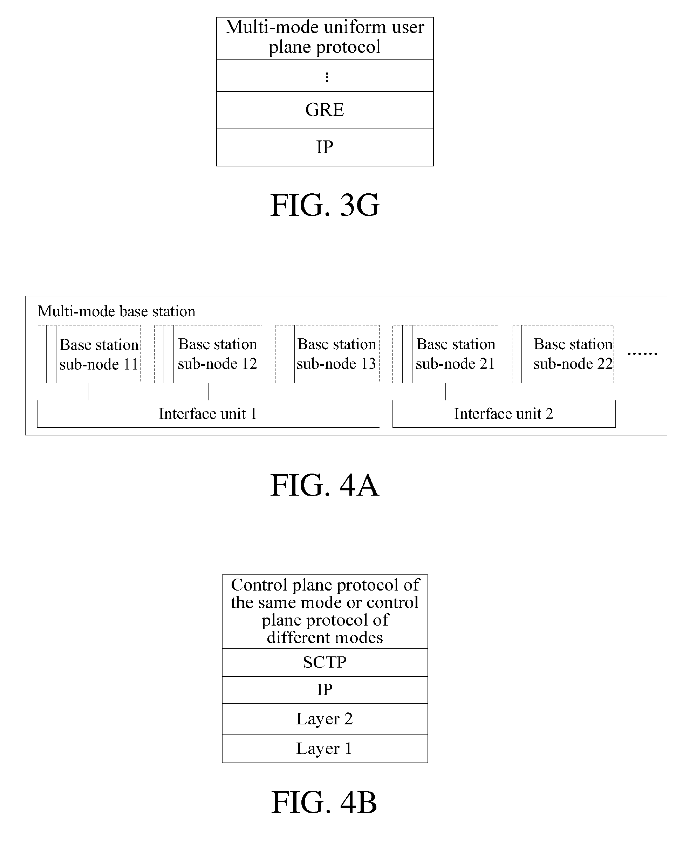

FIG. 3G is a fourth schematic drawing of a user plane transmission protocol stack according to the first embodiment of the present invention. As shown in FIG. 3G, when the user plane protocol employs the generic routing encapsulation (GRE) bearer of the internet engineering task force (IETF), the user plane transmission protocol stack at least includes an IP layer, a GRE layer, and a uniformly defined multi-mode uniform user plane protocol layer. In this way, a certain base station sub-node in the multi-mode base station sending the user data may encapsulate the user data in turn according to the user plane transmission protocol stack, and then send the user data. Specifically, a certain base station sub-node in the multi-mode base station receiving the user data may decapsulate the received user data in turn according to the user plane transmission protocol stack, acquire the content of the user data, and implement interaction of the user data. It can be seen, the GRE protocol packet can encapsulate the multi-mode uniform user plane protocol packet.

When the multi-mode base stations are communicatively coupled to each through a uniform interface unit, the interface unit connected thereto also exists between the conventional base station sub-nodes having no connection interfaces such as the GSM base station sub-nodes or GSM enhanced base station sub-nodes, so that the base station sub-nodes can perform interaction of the control information or the user data directly, making the implementation of the system more flexible, and optimizing the related processing flow. For example, the GSM base station sub-nodes or the GSM enhanced base station can deliver load information through the interface unit. In this way, when performing the cell handover, the GSM base station sub-node reports the load information to a switching control unit, such as BSC, by altering the measurement result and carrying the load information in the measurement result, or by carrying the load information through a newly constructed message. When selecting a proper cell to switch, the switching control unit, such as BSC, may consider the load information, and determine the switching cell according to switching determination conditions and the load information. When selecting a proper cell to switch, the GSM enhanced base station sub-node considers the load information directly, thus greatly increasing the rate of successful handover and effectively avoiding the blindness of handover.

If multiple LTE base station sub-nodes are included in the multi-mode base station, at least the functions of X2 interface are supported in the multi-mode base station, such as handover flow, data forwarding, and interaction of load and resource usage of other cells. Interface functions also should be provided between other base station sub-nodes of the same mode or base station sub-nodes of different modes in the multi-mode base station. These interfaces can be used for implementing handover, sharing of load information, interference information etc. The different base station sub-nodes in the multi-mode base station can are communicatively coupled to each other through different interface units, i.e., part of the base station sub-nodes are communicatively coupled to each other through an interface unit, another part of the base station sub-nodes are communicatively coupled to each other through another interface unit, and so on. The base station sub-nodes in the multi-mode base station also can are communicatively coupled to each other through a uniform interface unit.

FIG. 4A is a schematic drawing of connections between base station sub-nodes in a multi-mode base station according to a second embodiment of the present invention. As shown in FIG. 4A, the base station sub-nodes 11, 12 and 13 in the same multi-mode base station are communicatively coupled to each other through an interface unit 1, the base station sub-nodes 21 and 22 in the same multi-mode base station are communicatively coupled to each other through an interface unit 2, and so on. Each interface unit provides a basal physical transmission bearer for transmitting a higher layer application protocol. The base station sub-nodes communicatively coupled to each other through the same interface unit may support the same RAT, or different RATs. If the base station sub-nodes communicatively coupled to each other through the same interface unit support the same RAT, and the connection interface exists between the existing base stations supporting the corresponding RAT, the interface unit can employ the existing interface. For example, LTE base station sub-nodes in the multi-mode base station are communicatively coupled to each other through the X2 interface, and here, the higher layer application protocol transmitted on the interface unit can employ the existing higher layer application protocol. If the base station sub-nodes communicatively coupled to each other through the same interface unit support different RATs, or the base station sub-nodes communicatively coupled to each other through the same interface unit support the same RAT, but no connection interface exists between the existing base stations supporting the corresponding RAT, the base station sub-nodes supporting the corresponding RAT in the multi-mode base station may are communicatively coupled to each other through the interface unit, and here, the higher layer application protocol transmitted on the interface unit employs a newly defined higher layer application protocol. For example, the WCDMA base station sub-nodes in the multi-mode base station are communicatively coupled to each other through the interface unit, and the higher layer application protocol transmitted on the interface unit employs a newly defined higher layer application protocol. For another example, the LTE base station sub-node in a multi-mode base station is communicatively coupled to the WiMax base station sub-node in the multi-mode base station through the interface unit, and the higher layer application protocol transmitted on the interface unit employs a newly defined higher layer application protocol.

FIG. 4B is a first schematic drawing of a control plane transmission protocol stack according to the second embodiment of the present invention. As shown in FIG. 4B, the control plane transmission protocol stack includes a layer 1, a layer 2, an IP layer, an SCTP layer, and a control plane protocol layer of the same mode. The control plane protocol of the same mode may be a conventional control plane protocol, such as the X2 interface control plane protocol, the A3 interface control plane protocol, the A7 interface control plane protocol, or a newly defined control plane protocol. Alternatively, the control plane transmission protocol stack includes a layer 1, a layer 2, an IP layer, an SCTP layer, and a control plane protocol layer of different modes. In this way, the base station sub-node sending control information encapsulates the control information in turn according to the control plane transmission protocol stack, and then sends the control information. The base station sub-node receiving control information decapsulates the received control information in turn according to the control plane transmission protocol stack, acquires the content of the control information, and then performs the corresponding operations according to the content of the control information. It can be seen that the SCTP protocol packet can encapsulate the control plane protocol packets of the same mode or control plane protocol packets of different modes.

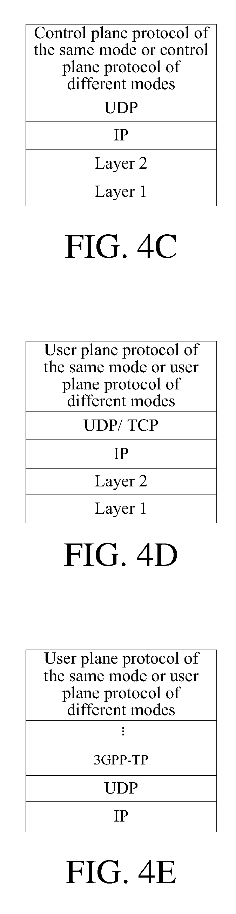

The control plane transmission protocol stack shown in FIG. 4B implements point to point transmission. When the base station sub-node needs to implement the point to multi-point transmission, the control plane transmission protocol stack thereof is shown in FIG. 4C, and the control plane transmission protocol stack includes a layer 1, a layer 2, an IP layer, a UDP layer, and a control plane protocol layer of the same mode. The control plane protocol of the same mode may be the conventional control plane protocol, such as the X2 interface control plane protocol, the A3 interface control plane protocol, and the A7 interface control plane protocol, or a newly defined control plane protocol. Alternatively, the control plane transmission protocol stack includes a layer 1, a layer 2, an IP layer, a UDP layer, and a control plane protocol layer of different modes. In this way, the base station sub-node sending the control information encapsulates the control information in turn according to the control plane transmission protocol stack, and sends the control information out. The base station sub-node receiving the control information decapsulates the received control information in turn according to the control plane transmission protocol stack, acquires the content of the control information, and then performs the corresponding operations according to the content of the control information. It can be seen, the UDP protocol packet can encapsulate the control plane protocol packets of the same mode or the control plane protocol packets of different modes.

FIG. 4D is a first schematic drawing of a user plane transmission protocol stack according to the second embodiment of the present invention. As shown in FIG. 4D, when the user plane protocol employs the UDP/TCP bearer, the user plane transmission protocol stack includes a layer 1, a layer 2, an IP layer, a UDP/TCP layer, and a user plane protocol layer of the same mode. The user plane protocol of the same mode may be the conventional user plane protocol, such as the X2 interface user plane protocol, the A3 interface user plane protocol, and the A7 interface user plane protocol, or a newly defined user plane protocol. Alternatively, the user plane transmission protocol stack includes a layer 1, a layer 2, an IP layer, a UDP/TCP layer, and a user plane protocol layer of different modes. In this way, the base station sub-node sending the user data encapsulates the user data in turn according to the user plane transmission protocol stack, and then sends the user data out. The base station sub-node receiving the user data decapsulates the received user data in turn according to the user plane transmission protocol stack, acquires the content of the user data, and implements interaction of the user data. It can be seen, the UDP/TCP protocol packet can encapsulate the user plane protocol packets of the same mode or the user plane protocol packets of different modes.

FIG. 4E is a second schematic drawing of a user plane transmission protocol stack according to the second embodiment of the present invention. As shown in FIG. 4E, when the user plane protocol employs the 3GPP-TP bearer, the user plane transmission protocol stack at least includes an IP layer, a UDP layer, a 3GPP-TP layer and, a user plane protocol layer of the same mode. The user plane protocol of the same mode may be the conventional user plane protocol, such as the X2 interface user plane protocol, the A3 interface user plane protocol, and the A7 interface user plane protocol, or a newly defined user plane protocol. Alternatively, the user plane transmission protocol stack at least includes an IP layer, a UDP layer, a 3GPP-TP layer, and a user plane protocol layer of different modes. In this way, the base station sub-node sending the user data encapsulates the user data in turn according to the user plane transmission protocol stack, and then sends the user data out. The base station sub-node receiving the user data decapsulates the received user data in turn according to the user plane transmission protocol stack, acquires the content of the user data, and implements interaction of the user data. It can be seen, the 3GPP-TP protocol packet can encapsulate the user plane protocol packets of the same mode or the user plane protocol packets of different modes.

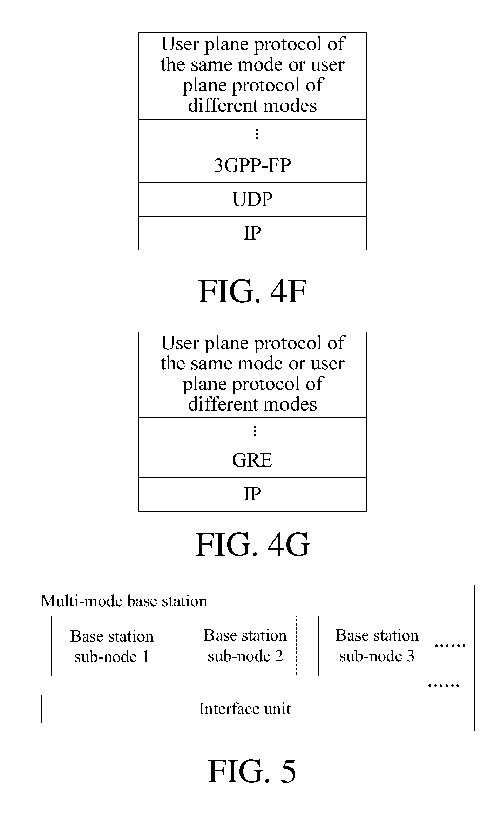

FIG. 4F is a third schematic drawing of a user plane transmission protocol stack according to the second embodiment of the present invention. As shown in FIG. 4F, when the user plane protocol employs the 3GPP-FP bearer, the user plane transmission protocol stack at least includes an IP layer, a UDP layer, a 3GPP-FP layer, and a user plane protocol layer of the same mode. The user plane protocol of the same mode may be the conventional user plane protocol, such as the X2 interface user plane protocol, the A3 interface user plane protocol, and the A7 interface user plane protocol, or a newly defined user plane protocol. Alternatively, the user plane transmission protocol stack at least includes an IP layer, a UDP layer, a 3GPP-FP layer, and a user plane protocol layer of different modes. In this way, the base station sub-node sending the user data encapsulates the user data in turn according to the user plane transmission protocol stack, and then sends the user data out. The base station sub-node receiving the user data decapsulates the received user data in turn according to the user plane transmission protocol stack, acquires the content of the user data, and implements interaction of the user data. It can be seen, the 3GPP-FP protocol packet can encapsulate the user plane protocol packets of the same mode or the user plane protocol packets of different modes.

FIG. 4G is a fourth schematic drawing of a user plane transmission protocol stack according to the second embodiment of the present invention. As shown in FIG. 4G, when the user plane protocol employs the GRE bearer of IETF, the user plane transmission protocol stack at least includes an IP layer, a GRE layer, and a user plane protocol layer of the same mode. The user plane protocol of the same mode may be the conventional user plane protocol, such as the X2 interface user plane protocol, the A3 interface user plane protocol, and the A7 interface user plane protocol, or a newly defined user plane protocol. Alternatively, the user plane transmission protocol stack at least includes an IP layer, a GRE layer, and a user plane protocol layer of different modes. In this way, the base station sub-node sending the user data encapsulates the user data in turn according to the user plane transmission protocol stack, and then sends the user data out. The base station sub-node receiving the user data decapsulates the received user data in turn according to the user plane transmission protocol stack, acquires the content of the user data, and implements interaction of the user data. It can be seen, the GRE protocol packet can encapsulate the user plane protocol packets of the same mode or the user plane protocol packets of different modes.

FIG. 5 is a schematic drawing of connection between the base station sub-nodes in the multi-mode base station according to a third embodiment of the present invention. As shown in FIG. 5, the base station sub-nodes in the same multi-mode base station are communicatively coupled to each other through a uniform interface unit that provides a basal physical transmission bearer and a uniform transmission protocol stack namely uniform logic interface for transmitting a higher layer application protocol. In this way, the different base station sub-nodes in the same multi-mode base station transmit the higher layer application protocol though a uniform interface. The higher layer application protocol at least includes a control plane protocol and a use plane protocol. The functions implemented by the interface unit between the base station sub-nodes in the same multi-mode base station mainly include a control plane and a user plane. The control plane is used for interaction of control information, such as, load information, resource usage information, interference information, and switching flow signaling message, and has the following main functions: supporting switching flow between cells, which may be switching between cells of the same mode, or switching between cells of different modes; supporting interference coordination flow between cells, which may be interference coordination between cells of the same mode, or interference coordination between cells of different modes; supporting information interaction between cells, such as load information, interference information, and resource usage information, which may be information interaction between cells of the same mode, or information interaction between cells of different modes. The user plane is used for implementing interaction of the user data, which mainly refers to transmit of the user data between base station sub-nodes in the same multi-mode base station. When base station sub-nodes in the same multi-mode base station transmit the higher layer application protocol, the specific control plane transmission protocol stack is the same as the description of FIGs. 3B and 3C, and the specific user plane transmission protocol stack is the same as the description of FIGs. 3D and 3G, so they are not repeated herein.

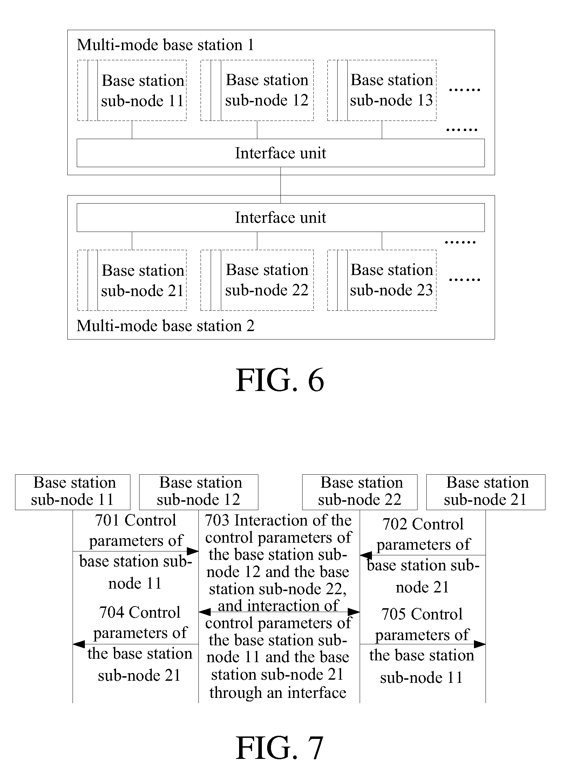

FIG. 6 is a schematic drawing of connection between multi-mode base stations and between internal base station sub-nodes according to a fourth embodiment of the present invention. As shown in FIG. 6, the multi-mode base stations, and the base station sub-nodes in the multi-mode base station are communicatively coupled to each other through a uniform interface unit. The uniform interface unit is adapted to transmit higher layer application protocol, and the base station sub-nodes of different modes can all support the uniform higher layer application protocol. That is to say, the multi-mode base stations, the different base station sub-nodes in the same multi-mode base station, and the base station sub-nodes in different multi-mode base stations all transmit the higher layer application protocol through the uniform interface unit. The specific control plane transmission protocol stack is the same as the description of FIGs. 3B and 3C, and the specific user plane transmission protocol stack is the same as the description of FIGs. 3D to 3G, so they are not repeated herein.

Because the multi-mode base stations, the different base station sub-nodes in the same multi-mode base station, and the base station sub-nodes in the different multi-mode base stations all support the uniform higher layer application protocol, the uniformity of the higher layer application protocol for transmitting between the multi-mode base stations, between the base station sub-nodes in the same multi-mode base station, and between the base station sub-nodes in the different multi-mode base stations is achieved. In this way, no matter sending the control information or the user data to the other base station sub-nodes in the same multi-mode base station, or sending the control information or the user data to the other base station sub-nodes in a different multi-mode base station, the base station sub-node can process the control information according to a uniform control plane transmission protocol stack or process the user data according to a uniform user plane transmission protocol stack. Correspondingly, no matter receiving the control information or the user data from the other base station sub-nodes in the same multi-mode base station, or receiving the control information or the user data from the other base station sub-nodes in a different multi-mode base station, the base station sub-node can process the control information according to the uniform control plane transmission protocol stack or process the user data according to the uniform user plane transmission protocol stack. The higher application protocol packet in a multi-mode base station and between the multi-mode base stations can be interacted through a uniform interface unit conveniently. The solution of providing the uniform transmission protocol stack in the multi-mode base station and between the multi-mode base stations greatly improves the performance of the system. The base station sub-node receiving the control information or the user data and the base station sub-node sending the control information or the user data can support the same RAT, or support different RATs.

The interface units in FIGs. 5 and 6 also can support many types of higher layer application protocols, i.e., the base station sub-nodes of different modes support different higher layer application protocols. For example, a LTE base station sub-node supports the higher layer application protocol of X2 interface. In this way, after the interface unit receiving the control information or the user data, the interface unit identifies and differentiates the corresponding type of the higher layer application protocol, and then sends the control information or the user data to a base station sub-node corresponding to the application type of the higher layer application protocol.

A unique identifier, such as IP address, can be assigned to each multi-mode base station and each base station sub-node in each multi-mode base station in the system. In this way, when different base station sub-nodes transmit the higher layer application protocol to each other (including the base station sub-nodes in the same multi-mode base station and the base station sub-nodes in different multi-mode base stations transmitting the higher layer application protocol to each other), or different multi-mode base stations transmit the higher layer application protocol to each other, the receiving end receiving the control information or the user data can be confirmed by the unique identifier, and the sending end sending the control information or the user data can also be confirmed by the unique identifier. Further, the RAT supported by the corresponding base station sub-node can be indicated by the unique identifier.

Additionally, if the multi-mode base stations are communicatively coupled to each other through a multi-mode interface, i.e., the base station sub-nodes of the same mode in different multi-mode base stations are communicatively coupled to each other through a conventional defined interface, for example, the LTE base station sub-nodes in different multi-mode base stations are communicatively coupled to each other through the X2 interface. Alternatively, a connection interface exists only when an interface has been defined currently between the base station sub-nodes in the multi-mode base station, for example, the LTE base station sub-node in the same multi-mode base station are communicatively coupled to each other though the X2 interface, while no connection interface exists between the GSM base stations or the GSM enhanced base stations in the same multi-mode base station, and here, the base station sub-nodes having no connection interface can interact information through the base station sub-nodes having the connection interface, that is, an existing interface can transmit the information of the base station sub-nodes having no connection interface by way of piggybacking, for example, piggybacking the relevant information of the GSM base station sub-nodes through the X2 interface between the LTE base station sub-nodes.

FIG. 7 is a schematic drawing of information interaction between the base station sub-nodes according to a fifth embodiment of the present invention. As shown in FIG. 7, no connection interface exists between the base station sub-node 11 and the base station sub-node 21, and a connection interface exists between the base station sub-node 12 and the base station sub-node 22. The processing of information interaction between the base station sub-nodes includes the following steps.

In step 701, the base station sub-node 12 acquires the relevant control parameters, such as wireless resource usage and load information, of the base station sub-node 11 through an internal mechanism, for example, an internal interface.

In step 702, the base station sub-node 22 acquires the relevant control parameters, such as wireless resource usage and load information, of the base station sub-node 21 through an internal mechanism, for example, an internal interface.

The performing of the step 701 and the step 702 has no obvious time sequence, the step 701 and the step 702 may be performed simultaneously; or the step 701 may be performed before the step 702; or the step 702 may be performed before the step 701.

In step 703, the base station sub-node 12 and the base station sub-node 22 interact the control parameters, such as wireless resource usage and load information, of the base station sub-node 12 and the base station sub-node 22 through the interface,; and interact the control parameters, such as wireless resource usage and load information, of the base station sub-node 11 and the base station sub-node 21etc.

In step 704, the base station sub-node 12 provides the control parameters, such as wireless resource usage and load information, related to the base station sub-node 21 to the base station sub-node 11 through an internal mechanism, for example, an internal interface The base station sub-node 11 may perform subsequent operations, such as requesting switching to an upper layer network element, according to the control parameters related to the base station sub-node 21.

In step 705, the base station sub-node 22 provides the control parameters, such as wireless resource usage and load information, related to the base station sub-node 11 to the base station sub-node 21 through an internal mechanism, for example, an internal interface. The base station sub-node 21 may perform subsequent operations, such as requesting switching to an upper layer network element, according to the control parameters related to the base station sub-node 11.

The performing of the step 704 and the step 705 has no obvious time sequence, the step 704 and the step 705 may be performed simultaneously; or the step 704 may be performed before the step 705; or the step 705 may be performed before the step 704.

The base station sub-node 11 and the base station sub-node 12 may be located in the same multi-mode base station, the base station sub-node 21 and the base station sub-node 22 may be located in another multi-mode base station; or the base station sub-node 11, the base station sub-node 12, the base station sub-node 21, and the base station sub-node 22 are located in the same multi-mode base station, and so on.

The more detailed illustration of the fifth embodiment is made by reference to two specific examples below.

For example, the multi-mode base station at least includes a WiMax base station sub-node and an LTE base station sub-node. Of course, multiple WiMax base station sub-nodes and LTE base station sub-nodes also may be located in different multi-mode base stations. The WiMax base station sub-node is the same as the LTE base station sub-node, both using the OFDMA technology, and therefore, interference coordination is probably needed between the WiMax base station sub-nodes. However, it is not defined that an R8 interface between the WiMax base station sub-nodes is able to deliver cell interference information, such as sub-carrier usage, when to use what kind of sub-carrier, power of sub-carrier. Therefore, according to the solution provided by the fifth embodiment, the WiMax base station sub-node can transmit interference information through the X2 interface between the LTE base station sub-nodes, and the interference coordination is then performed by an interference coordinating unit, such as the WiMax base station sub-node. Alternatively, the WiMax base station sub-node provides interference information to other LTE base station sub-node through the X2 interface between the LTE base station sub-nodes, and the interference coordination is then performed by the interference coordinating unit, such as the LTE base station sub-node.

The multi-mode base station at least includes a GSM base station sub-node or a GSM enhanced base station sub-node and a LTE base station sub-node. Of course, multiple GSM base station sub-nodes or GSM enhanced base station sub-nodes and LTE base station sub-nodes may be located in different multi-mode base stations, and no connection interface exists between the GSM base station sub-nodes or GSM enhanced base station sub-nodes. According to the solution provided by the fifth embodiment, the GSM base station sub-nodes or the GSM enhanced base station sub-nodes may perform interaction of load information through the X2 interface between the LTE base station sub-nodes. When performing cell switching, the GSM base station sub-node reports the load information to the switching control unit,such as BSC, to alter the measurement result, reporting the load information to the switching control unit, such as BSC, by carrying load information in the measurement result, or report the load information to the switching control unit, such as BSC, by carrying load information in a newly constructed message. When selecting a proper cell to switch, the switching control unit, such as BSC, may consider the load information and determine the switching cell according to the switching determination condition and the load information. When selecting a proper cell to switch, the GSM enhanced base station sub-node considers the load information directly, thus greatly increasing the rate of successful switching, so that when performing cell switching under the GSM mode, the load information of the neighboring cell is fully considered to effectively avoid the blindness of switching and enhance the performance of switching.

The interface units or interfaces described above may be one or more distributed independent logic interfaces.

It will be apparent to those skilled in the art that various modifications and variations can be made to the structure of the present invention without departing from the scope or spirit of the present invention. Therefore, the content of the specification of the present invention shall not be considered as restricting the present invention.

## Claims

1. A system for communication between multi-mode base stations, comprising:
multiple multi-mode base stations, wherein the multi-mode base stations are communicatively coupled to each other through a uniform interface unit, and
the uniform interface unit being adapted to bear a higher layer application protocol.

2. The system according to claim 1, wherein:
the base station sub-nodes of the same mode in the multi-mode base station are communicatively coupled to each other through the same interface unit, and the same interface unit is adapted to transmit a higher layer application protocol; or,
the base station sub-nodes of at least two determined modes in the multi-mode base station are communicatively coupled to each other through a set interface unit, and the set interface unit is adapted to transmit a higher layer application protocol; or
base station sub-nodes in the multi-mode base station are communicatively coupled to each other through a uniform interface unit, and the uniform interface unit is adapted to transmit a higher layer application protocol.

3. The system according to claim 2, wherein the interface unit between the base station sub-nodes of the same mode is further adapted to transmit control parameters between other base station sub-nodes having no interface unit connected.

4. The system according to claim 2 or 3, wherein:
the base station sub-nodes of the same mode are long term evolution, LTE, base station sub-nodes, and the interface unit is an X2 interface; or,
the base station sub-nodes of the same mode are world interoperability for microwave access, WiMax, base station sub-nodes, and the interface unit is an R8 interface; or,
the base station sub-nodes of the same mode are code division multiple access, CDMA, 2000 base station sub-nodes, and the interface units are A3 interfaces and A7 interfaces; or
any combination thereof.

5. The system according to claim 2, wherein:
the uniform interface unit between the base station sub-nodes is adapted to identify the type of a higher application protocol, determine the base station sub-node corresponding to the type of the higher application protocol; or,
the uniform interface unit between the base station sub-nodes is the same as the uniform interface unit between the multi-mode base stations, and the higher layer application protocol is a uniform higher layer application protocol.

6. A multi-mode base station of internal communication, comprising: base station sub-nodes supporting multiple modes, wherein the base station sub-nodes are communicatively coupled to each other through an interface unit; and
the interface unit is adapted to bear a higher layer application protocol.

7. The base station according to claim 6, wherein:
the base station sub-nodes communicatively coupled to each other through an interface unit are base station sub-nodes of the same mode, and the base station sub-nodes of the same mode are communicatively coupled to each other though the same interface unit; or,
the base station sub-nodes communicatively coupled to each other through an interface unit are base station sub-nodes of at least two determined modes, and the base station sub-nodes of at least two determined modes are communicatively coupled to each other through a set interface unit; or,
the interface unit is a uniform interface unit.

8. The base station according to claim 7, wherein the interface unit between the base station sub-nodes of the same mode is further adapted to transmit control parameters between other base station sub-nodes having no connection interfaces.

9. The base station according to claim 7 or 8, wherein:
the base station sub-nodes of the same mode are long term evolution, LTE, base station sub-nodes, and the interface unit is an X2 interface; or
the base station sub-nodes of the same mode are world interoperability for microwave access, WiMax, base station sub-nodes, and the interface unit is an R8 interface; or,
the base station sub-nodes of the same mode are code division multiple access, CDMA, 2000 base station sub-nodes, and the interface units are A3 interfaces and A7 interfaces; or,
any combination thereof.

10. The base station according to claim 7, wherein:
the higher layer application protocol has different types, and the uniform interface unit between the base station sub-nodes is adapted to identify the type of the higher layer application protocol and determine the base station sub-node corresponding to the type of the higher layer application protocol; or,
the higher layer application protocol is a uniform higher layer application protocol.

11. A method for communication of multi-mode base stations, comprising: transmitting, by the multi-mode base stations, a higher layer application protocol to each other according to a uniform transmission protocol stack supported by an interface unit connected.

12. The method according to claim 11, further comprising: transmitting, by the base station sub-nodes in the multi-mode base station, the higher layer application protocol according to the transmission protocol stack supported by the interface unit connected.

13. The method according to claim 12, wherein the base station sub-nodes connected by the interface unit are base station sub-nodes of the same mode; or base station sub-nodes of different modes.

14. The method according to claim 12, further comprising: transmitting, by two base station sub-nodes having an interface unit connected, control parameters between other base station sub-nodes having no interface unit connected through the interface unit.

15. The method according to claim 12, wherein:
the higher layer application protocol is a control plane protocol, and the base station sub-nodes transmit control information to each other through the interface unit; or,
the multi-mode base station comprises the base station sub-nodes having no interface unit connected, and the base station sub-nodes having no interface unit connected transmit control information through an interface unit between the base station sub-nodes having the interface unit connected.

16. The method according to claim 15, wherein:
the control information is load information, and the method further comprises: reporting, by the base station sub-nodes, the load information to a switching control unit, and performing, by the switching control unit, cell handover with reference to the load information; or,
the control information is interference information, and the method further comprises: reporting, by the base station sub-nodes, the interference information to an interference coordinating unit, and performing, by the interference coordinating unit, interference coordination according to the interference information.

17. The method according to claim 16, wherein the reporting the load information or the interference information comprises:
carrying the load information or the interference information by a measurement report; or,
carrying the load information or the interference information by a set message.

18. The method according to claim 11, wherein the transmitting, by the multi-mode base stations, a higher layer application protocol to each other according to a uniform transmission protocol stack supported by a uniform interface unit connected comprises:
encapsulating, by a multi-mode base station sending end, information according to a uniform transmission protocol stack supported by the uniform interface unit connected, and sending the encapsulated information; and
decapsulating, by a multi-mode base station receiving end, the received higher layer application protocol according to the uniform transmission protocol stack supported by the uniform interface unit connected, and acquiring content of the information .

19. An internal communication processing method for a multi-mode base station, wherein the multi-mode base station comprises base station sub-nodes supporting multiple modes, and the method comprises:
transmitting, by the base station sub-nodes, a higher layer application protocol to each other according to a transmission protocol stack supported by an interface unit connected.

20. The method according to claim 19, wherein the base station sub-nodes connected with the interface unit are base station sub-nodes of the same mode, or base station sub-nodes of different modes.

21. The method according to claim 19, further comprising: transmitting, by two base station sub-nodes having the interface unit connected, control parameters between other base station sub-nodes having no interface unit connected through the interface unit.

22. The method according to claim 19, wherein transmitting, by the base station sub-nodes, a higher layer application protocol to each other according to a transmission protocol stack supported by an interface unit connected comprises:
encapsulating, by a base station sub-nodes sending end, information according to a transmission protocol stack supported by the interface unit connected and sending the encapsulated information; and
decapsulating, by a base station sub-node receiving end, the received information according to the transmission protocol stack supported by the interface unit connected, and acquiring content of the information.

23. The method according to claim 19, wherein:
the higher layer application protocol is a control plane protocol, and the base station sub-nodes transmit control information through the interface unit; or,
the multi-mode base station comprises base station sub-nodes having no interface unit connected, and the base station sub-nodes transmit control information through the interface unit between the base station sub-nodes having the interface unit connected.

24. The method according to claim 23, wherein:
the control information is load information, and the method further comprises: reporting, by the base station sub-node, the load information to a switching control unit, and performing, by the switching control unit, cell handover with reference to the load information; or,
the control information is interference information, and the method further comprises: reporting, by the base station sub-node, the load information to an interference coordinating unit, and performing, by the interference coordinating unit, interference coordinating according to the interference information.
